# EUROPÄISCHE PATENTANMELDUNG

(11) **EP 3 915 448 A1**
(43) Veröffentlichungstag der Anmeldung: **01.12.2021**
(21) Anmeldenummer: 21170819.3
(22) Anmeldetag: 28.04.2021
(51) Int. Cl.: A47J 31/44

(54) **HEISSGETRÄNKEBEREITER MIT EINER ABLAUFVORRICHTUNG**

(30) Priorität: 27.05.2020 DE 102020114157; 24.07.2020 DE 102020119558
(71) Anmelder: Miele & Cie. KG, 33332 Gütersloh (DE)
(72) Erfinder: Hotzwig, Dennis, 59227 Ahlen (DE); Schobeß, Florian, 32051 Herford (DE); Falkenreck, Timo, 33332 Gütersloh (DE); Kukla, Veronika, 33619 Bielefeld (DE)

(57) **Zusammenfassung**

Die Erfindung betrifft einen Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühender Brühsubstanz (S1) und einer Einlassleitung zum Einlassen von Brühwasser in die Brühkammer (41),
- eine Heizeinrichtung (9) zum Erhitzen des der Brühkammer (41) zugeführten Wassers
- eine Pumpe (8), die dazu ausgebildet ist, das Wasser aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks,
- einer Ablaufvorrichtung (50), umfassend
- eine Auffangschale (34) zum Auffangen von Flüssigkeit (AW), welche eine Einlassöffnung (53) und eine Auslassöffnung (52) zum Abführen der aufgefangenen Flüssigkeit (AW) umfasst.

Der Heißgetränkebereiter (1) zeichnet sich dadurch aus, dass die Schale (34) einen Boden (51) mit Gefälle zur Auslassöffnung (52) umfasst und der Boden (51) der Schale (34) mit zumindest einer Rinne (56) versehen ist.

## Beschreibung

Die Erfindung betrifft einen Heißgetränkebereiter mit einem Strömungsleitungssystem mit
- einer Wasserquelle;
- einer Brüheinheit, wobei die Brüheinheit eine Brühkammer zur Aufnahme von aufzubrühender Brühsubstanz und einer Einlassleitung zum Einlassen von Brühwasser in die Brühkammer;
- eine Heizeinrichtung zum Erhitzen des der Brühkammer zugeführten Wassers;
- eine Pumpe, die dazu ausgebildet ist, das Wasser aus der Quelle zur Brühkammer zu fördern;
- eine Steuereinrichtung zur Aktivierung und Deaktivierung der genannten Aktoren zur Zubereitung eines ausgewählten Getränks;
- einer Ablaufvorrichtung, umfassend
- eine Auffangschale zum Auffangen von Flüssigkeit, welche eine Einlassöffnung und eine Auslassöffnung zum Abführen der aufgefangenen Flüssigkeit umfasst.

Eine derartige Heißgetränkebereiter ist aus der DE 10 2015 208 212 B3 bekannt. Auch hier kommt ein Filter zum Einsatz, der in diesem Fall jedoch unmittelbar oberhalb des Ablaufes der Auffangschale angeordnet ist und in die Auffangschale integriert wird. Bei dieser Ausführungsvariante werden also die Kaffeereste zusammen mit der Restflüssigkeit in der Auffangschale gesammelt, wobei der Filter dafür sorgt, dass die zuvor erwähnte Trennung erfolgt und das Abwasser über einen an der Auffangschale vorhandenen Ablauf abgeführt wird.

Der Erfindung liegt somit die Aufgabe zu Grunde, einen Heißgetränkebereiter mit einer einfachen und verbesserten Ablaufvorrichtung bereitzustellen.

Erfindungsgemäß wird unter anderem diese Aufgabe durch einen Heißgetränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass das Abwasser und Restwasser zuverlässig von Sedimenten befreit wird. Dadurch wird sichergestellt, dass die Ablauföffnung und der Ablaufschlauch nicht verstopfen. Ferner ist es vorteilhaft, ein Ventil in der Ablauföffnung einzusetzen. Hierbei wird mit der verbesserten Reinigung des Abwassers vermieden, dass das Ventil hinsichtlich seiner Schließfunktion nicht beeinträchtigt wird. Das Abwasser wird hierbei auf einfache Art und Weise von Sedimenten und Schwebeteilchen befreit, sodass es bei der weiteren Abführung keine Verstopfungen oder Undichtigkeiten in nachgeschalteten Ventilen verursachen kann. Ein weiterer Vorteil ist, dass keine separaten Komponenten verwendet und vom Benutzer gehandhabt werden müssen, wodurch sich insgesamt ein geringer Wartungsaufwand zum Reinigen des Getränkebereiters ergibt.

Hierzu ist der Boden der die Schale mit einem Gefälle zur Auslassöffnung versehen oder entsprechend mit einem Gefälle im Gerät positioniert, wobei der Boden der Schale bzw. die innere Oberfläche mit zumindest einer Rinne versehen ist. Das mit Sedimenten oder Schwebeteilchen behaftete Abwasser tritt an der Eingangsöffnung bzw. der oben offenen Seite in die Schale ein und fließt auf dem Schalenboden zum Auslass. Dabei lagern sich Sedimente in der Rinne oder den Rinnen ab und das Wasser schwappt über den oberen Rand der Rinne. So wird das Abwasser von Sedimenten befreit und gelangt gereinigt zum Auslass. Die Sedimente und Feststoffe werden in den Rinnen gesammelt und gelagert. Da sich die Rinnen mit fortschreitender Betriebsdauer füllen, müssen diese auch entleert werden. Dies geschieht dadurch, dass der Benutzer die Schale auf der Innenseite manuell ausspült. Der Boden kann für diese und alle anderen Ausführungsformen mit einer hydrophoben Oberfläche versehen sein, um einen sogenannten Lotusblüten-Effekt zu erzielen.

In einer vorteilhaften Ausführung ist der Boden der Abtropfschale mit einer Struktur aus Rinnen versehen. Die Mehrzahl der Rinnen können dabei sehr flach ausgebildet werden, sodass über die Bodenfläche verteilt die Sedimente gesammelt werden können.

In einer zweckmäßigen Ausführung ist die Rinne oder die Rinnen quer zum Gefälle auf dem Boden angeordnet, wodurch vermieden wird, dass bereits in den Rinnen abgesetzte Sedimente bei erneutem Abwasserschwall aus der Rinne herausgespült werden.

In einer weiteren, vorteilhaften Ausführung sind im Boden in Richtung des Gefälles mehrere querverlaufende Rinnen hintereinander angeordnet. Dadurch wird eine sequentielle Reinigung des Abwassers vorgenommen, weil Sedimente, die über die erste Rinne hinweggetragen werden, in der nächstfolgenden Rinne landen und dort verbleiben. Die Strömung des Abwassers zur Auslassseite hin erfolgt aufgrund der Schwerkraft und des Gefälles im Schalenboden bzw. den als Gefälle konzipierten Schalenboden.

In einer bevorzugten Weiterbildung beträgt der Abstand der Rinnen in Richtung des Gefälles einen Wert im Bereich von 1 cm bis 5 cm, bevorzugt 1,5 bis 4 cm.

In einer insgesamt vorteilhaften Ausführung ist die Rinne oder die Rinnen mit einer Tiefe im Bereich zwischen 0,5 mm bis 5 mm versehen. Dadurch wird einerseits ein ausreichendes Volumen zur Aufnahme von Sedimenten und andererseits die Strömung des Abwassers zum Auslass hin nicht zu stark beeinträchtigt oder gebremst. Ferner sind solche Vertiefungen mit im Haushalt üblichen Mitteln, wie Schwamm, Bürste oder Wischtuch, gut zu reinigen.

In einer weiteren, insgesamt zweckmäßigen Ausführung erstreckt sich die Rinne oder die Rinnen über die gesamte Schalenbreite, sodass die gesamte Breite der Schale zum Auffangen der Sedimente ausgenutzt wird.

In einer insgesamt vorteilhaften Ausführung ist die Rinne oder die Rinnen mit Unterbrechungen, bevorzugt 1 mm bis 5 mm breit, versehen. Unterbrechungen können durch Stege bereitgestellt werden, die sich aus der Rinne bis zur Ebene der Bodenfläche erstrecken.

In einer insgesamt vorteilheften Weiterbildung ist die Rinne oder die Rinnen bogenförmig gekrümmt ausgebildet, wobei konvexe Seite zur Auslassseite hinzeigt. Damit werden Sediment in die Rinne eingespült und gelangen in den Scheitelbereich der Krümmung, in dem sie stabil verbleiben. Ein nachfolgender Abwasserschwall kann die bereits eingelagerten Sedimente nicht zur Seite der Rinne hin ausspülen.

In einer weiteren, insgesamt vorteilhaften Ausführung sind ist die Rinne oder die Rinnen im Profil sägezahnförmig ausgebildet, mit jeweils einer sanft abfallenden Flanke auf der Seite zum Ablauf hin und einer steilen Flanke, bevorzugt senkrecht, auf der Seite vom Ablauf und wegweisend. Gegen diese steile Flanke strömt das Abwasser, sodass Sedimente an dieser Flanke aufgehalten werden und an dieser Stelle zum Boden sinken. Ferner hat diese Formgebung den Effekt, dass bereits eingelagerte Sedimente stabil in der Rinne verbleiben. Ein nachfolgender Abwasserschwall kann die bereits eingelagerten Sedimente nicht nach oben aus der Rinne ausspülen.

In einer insgesamt zweckmäßigen Ausführung umfasst die Schale einen Boden mit Gefälle zur Auslassöffnung, um das Ablaufen des gefilterten Abwassers zu verbessern.

In einer weiteren, insgesamt vorteilhaften Ausführung ist die Rinne oder die Rinnen durch Einbuchtungen, Beispielsweise Rillen, in der Ebene des Bodens und/oder durch Ausbuchtungen bzw. Vorsprünge aus der Ebene des Schalenbodens gebildet. Als Ausbuchtung sind streifenförmige Erhebungen auf dem Schalenboden anzusehen.

In einer bevorzugten Weiterbildung ist die Rinne oder die Rinnen jeweils aus einer Kombination aus Einbuchtungen und Ausbuchtungen gebildet, wobei bevorzugt die Einbuchtung der Rinne an ihrem Ende zur Auslassseite hin in eine Erhebung übergeht. Damit kann eine gut funktionierende Rinne mit ausreichender Tiefe gebildet werden, die nur um die halbe Tiefe in den Schalenboden hineinragt und nur die halbe Tiefe aus der Ebene der Oberfläche des Behälterbodens hinausragt.

In einer weiteren, vorteilhaften Ausführung ist die Struktur der Rinnen aus einer Kombination aus Einbuchtungen und Ausbuchtungen gebildet, sodass zumindest eine Rinne als Einbuchtung und zumindest eine weitere Rinne als Ausbuchtung ausgeführt ist. Bevorzugt wechseln sich die Einbuchtungen und Ausbuchtungen ab. Somit ist zu einer als Einbuchtung ausgeführten Rinne benachbart eine als Ausbuchtung ausgeführte Rinne angeordnet und umgekehrt. Damit werden Sedimente zuverlässig am Boden der Abtropfschale zurückgehalten.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung;
- Fig. 2 und 3:: die Ablaufvorrichtung in verschiedenen Ausführungen und
- Fig. 4:: den Boden der Auffangschale in einer geschnittenen Detailansicht.

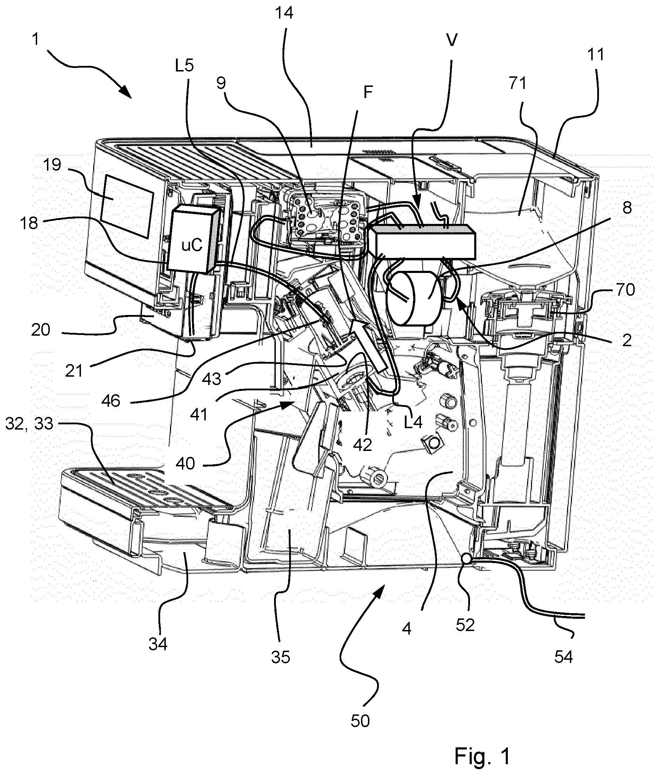

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Im Frontbereich des Heißgetränkebereiter 1 verfügt dieser über einen höhenbeweglichen Auslass 20, in dem mehrere Entnahmeeinrichtungen, hier Auslassdüsen 21 untergebracht sind. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller µC mit einem zugeordneten Speicher ausgeführt ist, ist in dieser Ausführung ferner dazu eingerichtet, die Ventile V des Strömungsleitungssystems 2 so anzusteuern, dass das heiße Wasser durch die Brühkammer 41, gepumpt wird.

Für alle hier erläuterten Ausführungen ist die Brühkammer 41 zylindrisch ausgebildet, wobei die Schichtung der Substanzen S1, S2 ggf. S3 von der bodenseitigen Stirnseite ausgehend erfolgt. Die obere Stirnseite wird nach dem Befüllen mit dem Brühsieb 43 verschlossen, wobei mit dem Brühsieb 43 die Substanzen in der Brühkammer 41 verpresst werden. Das heiße Wasser wird in den Einlass 42 an der bodenseitigen Stirnseite eingelassen, wobei die Brühflüssigkeit durch das Brühsieb 43 und bevorzugt durch ein nachgeschaltetes Druckventil 46 zur Auslassdüse 21 gelangt.

Außenseitig an der Frontwand des Gehäuses 11 ist die Bedien- und Anzeigevorrichtung 19 angeordnet, in diesem Beispiel ist sie mit Touchflächen und einem Display oder als Berührbildschirm ausgebildet, um Eingaben bezüglich der Getränkeauswahl und zusätzliche Einstellungen hinsichtlich Wassermenge, Geschmack Stärke oder Bohnensorte bereitzustellen. Die Bedien- und Anzeigevorrichtung 19 steht dabei datentechnisch mit der Steuereinrichtung 18 bzw. mit dem dort vorhandenem Mikroprozessor µC in Verbindung.

Die Steuereinrichtung 18 mit einem Mikrocontroller µC und einer Speichereinrichtung MEM dient zur Durchführung einer Getränkezubereitung, wobei hierbei die Aktivierung der Heizeinrichtung 9, der Ventile der Ventilvorrichtung V sowie der Pumpe 8, der Brüheinheit 40 mit der verfahrbaren Brühkammer 41 und bedarfsweise weiteren Komponenten, wie einem Mahlwerk 70 durch entsprechende Signalverbindungen (nicht dargestellt) erfolgt.

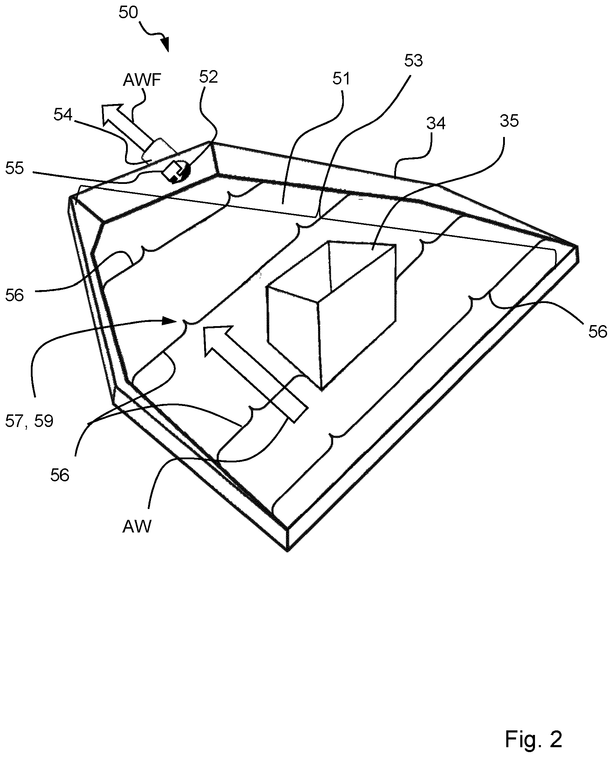

Fig. 2 zeigt die Ablassvorrichtung 50 in einer schematischen Detailansicht. Die Auffangschale 34 als zentrales Funktionsbauteil umfasst einen Schalenboden 51, der mit einem Gefälle zur Ablassöffnung 52 ausgebildet ist. Das Gefälle stellt die Funktion eines Trichters bereit, um das in der Schale 34 eintreffende Abwasser AW gezielt zur Auslassöffnung 52 zu leiten. Die Schale 34 ist oben offen ausgeführt und stellt die Einlassöffnung 53 für das eintreffende Abwasser AW bereit. In der Darstellung ist der diagonale Durchmesser der Einlassöffnung 53 hervorgehoben, um den maximal großen Querschnitt zu verdeutlichen. In der Schale 34 bzw. auf dem Boden 51 der Schale 34 sind mehrere Rinnen 56 angeordnet. In dem dargestellten Beispiel erstrecken sich die Rinnen 56 über die gesamte Breite der Auffangschale 34. Der Ablassöffnung 52 ist der Ablaufschlauch 54 nachgeschaltet, der zum Anschluss an einen Abwasserkanal vorgesehen ist. In der Auslassöffnung 52 oder unmittelbar dahinter kann in Rückschlagventil 55 angeordnet sein, um das Ausströmen von Abwasser aus der Auffangschale 34 zu verhindern, wenn diese aus dem Gerät 1 herausgezogen wird. Die genannten Komponenten und ihre Anordnung sind größtenteils auch in der Fig. 1 ersichtlich. In dem dargestellten Beispiel sind die Rinnen 56 gekrümmt ausgebildet, wobei die Ausbuchtung oder der Scheitelbereich 57 zum Auslass 52 hinzeigt.

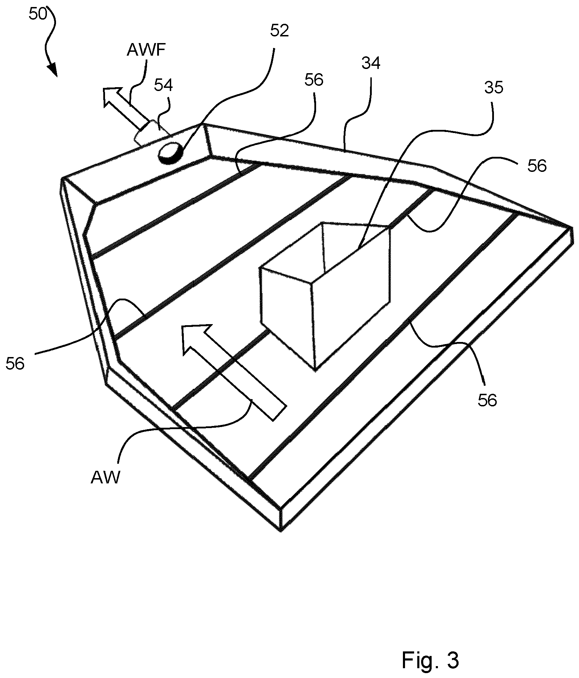

Fig. 3 zeigt die Ablaufvorrichtung 50 in einer schematischen Detailansicht in einer Ausführung mit geraden Rinnen 56. Die Auffangschale 34 besitzt einen Boden 51 mit einem Gefälle zur Auslassöffnung 52. Die Auslassöffnung 52 befindet sich dabei bevorzug an der tiefsten Stelle in der Auffangschale 34, was in der Skizze nicht so deutlich dargestellt ist. An der Auslassöffnung 52 ist die Leitung 54 angeschlossen, die das gefilterte Abwasser AWF nach außen führt und an einen Abwasserkanal angeschlossen werden kann. Als mögliche Verursacher für Abwasser AW kommt der Getränkeauslass 20 bzw. die Auslassdüse 21 und die Brüheinheit 40 in Frage. Weitere Komponenten, wie Ablassleitungen oder Ventile V zum Ablassen von Spülflüssigkeit oder Reinigerlösung kommen auch in Frage. Das Abwasser AW aus diesen Verursachern gelangt in die Schale 34 und damit auf den Boden 51, der sich im gezeigten Beispiel unterhalb der Einlassöffnung 53 befindet.

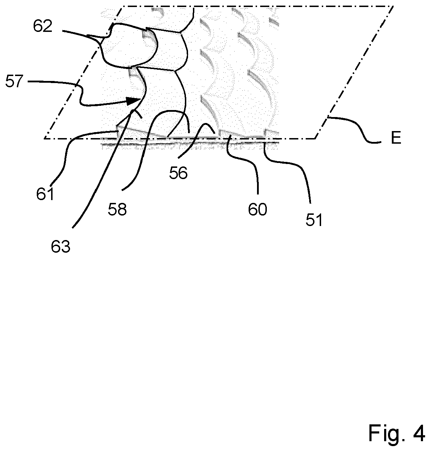

Fig. 4 zeigt einen Ausschnitt des Bodens 51 in einer geschnittenen Seitenansicht. Die Oberfläche 58, die sich auf der Innenseite der Schale 34 befindet, ist mit Vorsprüngen 60 versehen, um eine Rinne 56 bereitzustellen. Die stegartigen Vorsprünge 60 sind gekrümmt mit jeweils einem Scheitelbereich 57 ausgebildet. Die Vorsprünge 60 sind entgegen der Strömungsrichtung des verschmutzten Abwassers AW mit einer steilen Flanke 61, hier etwa im rechten Winkel zur Ebene E der Bodenfläche 58, versehen. Die Oberseite 63 der jeweiligen Vorsprünge 60 ist schräg, sanft abfallend gestaltet. Daraus ergibt sich eine sägezahnförmige Ausgestaltung der Stege 60. Die ausgeformten Rinnen 56 sind dabei jeweils annähernd sägezahnförmig oder sägezahnförmig ausgebildet. Mögliche Durchbrüche 59 (Fig. 2) können im Scheitelbereich 57 oder in den Endbereichen 62 der gekrümmten Stegsegmente 60 angeordnet sein. In einer anderen, nicht dargestellten Ausführung können die Rinnen 56 entsprechend in den Schalenboden 51 eingeformt oder eingefräst sein. Dadurch ragt kein Material aus der Ebene E der Oberfläche 58 hinaus.

## Patentansprüche

1. Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühender Brühsubstanz (S1) und einer Einlassleitung zum Einlassen von Brühwasser in die Brühkammer (41),
- eine Heizeinrichtung (9) zum Erhitzen des der Brühkammer (41) zugeführten Wassers
- eine Pumpe (8), die dazu ausgebildet ist, das Wasser aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks,
- einer Ablaufvorrichtung (50), umfassend
- eine Auffangschale (34) zum Auffangen von Flüssigkeit (AW), welche eine Einlassöffnung (53) und eine Auslassöffnung (52) zum Abführen der aufgefangenen Flüssigkeit (AW) umfasst,
**dadurch gekennzeichnet,**
**dass** die Schale (34) einen Boden (51) mit Gefälle zur Auslassöffnung (52) umfasst und der Boden (51) der Schale (34) mit zumindest einer Rinne (56) versehen ist.

2. Heißgetränkebereiter nach Anspruch 1,
**dadurch gekennzeichnet**
**dass** der Boden (51) mit einer Struktur aus zumindest zwei Rinnen (56) versehen ist.

3. Heißgetränkebereiter nach Anspruch 1 oder 2,
**dadurch gekennzeichnet,**
**dass** die Rinne (56) oder die Rinnen (56) quer zum Gefälle auf dem Boden (51) angeordnet sind.

4. Heißgetränkebereiter nach Anspruch 2 oder 3,
**dadurch gekennzeichnet,**
**dass** im Boden (51) in Richtung des Gefälles mehrere Rinnen (56) hintereinander angeordnet sind.

5. Heißgetränkebereiter nach einem der Ansprüche 2 bis 4,
**dadurch gekennzeichnet,**
**dass** der Abstand der Rinnen (56) in Richtung des Gefälles im Bereich von 1 cm bis 5 cm, bevorzugt 1, 5 bis 4 cm liegt.

6. Heißgetränkebereiter nach einem der Ansprüche 1 bis 5,
**dadurch gekennzeichnet,**
**dass** die Rinne (56) oder die Rinnen (56) jeweils eine Tiefe im Bereich zwischen 0,5 mm bis 5 mm aufweisen.

7. Heißgetränkebereiter nach einem der Ansprüche 1 bis 6,
**dadurch gekennzeichnet,**
**dass** sich die Rinne (56) oder die Rinnen (56) über die gesamte Schalenbreite erstrecken.

8. Heißgetränkebereiter nach Anspruch 7,
**dadurch gekennzeichnet,**
**dass** die Rinnen (56) mit Unterbrechungen (59), bevorzugt 1 mm bis 5 mm breit, versehen sind.

9. Heißgetränkebereiter nach einem der Ansprüche 1 bis 8,
**dadurch gekennzeichnet,**
**dass** die Rinne (56) oder die Rinnen (56) bogenförmig gekrümmt sind, wobei die konvexe Seite (57) zur Auslassseite (52) hinzeigt.

10. Heißgetränkebereiter nach einem der Ansprüche 1 bis 9,
**dadurch gekennzeichnet,**
**dass** die Rinne (56) oder die Rinnen (56) im Profil sägezahnförmig ausgebildet sind, mit jeweils einer sanft abfallenden Flanke auf der Seite zum Ablauf (52) hin und einer steilen Flanke (61), bevorzugt senkrecht, auf der gegenüberliegenden Seite zum Ablauf (52).

11. Heißgetränkebereiter nach einem der Ansprüche 1 bis 10,
**dadurch gekennzeichnet,**
**dass** die Rinne (56) oder die Rinnen (56) durch Einbuchtungen in der Ebene (E) des Bodens (52) und/oder durch Ausbuchtungen bzw. Vorsprünge (60) aus der Ebene (E) des Schalenbodens (51) gebildet sind.

12. Heißgetränkebereiter nach Anspruch 11,
**dadurch gekennzeichnet,**
**dass** die Rinne (56) oder die Rinnen (56) jeweils aus einer Kombination aus Einbuchtungen und Ausbuchtungen (60) gebildet sind, wobei bevorzugt die Einbuchtung der Rinne (56) an ihrem Ende zur Auslassseite hin in eine Erhebung (60) übergeht.

13. Heißgetränkebereiter nach Anspruch 11,
**dadurch gekennzeichnet,**
**dass** die Struktur der Rinnen (56) aus einer Kombination aus Einbuchtungen und
Ausbuchtungen (60) gebildet ist, sodass zumindest eine Rinne (56) als Einbuchtung und zumindest eine weitere Rinne (56) als Ausbuchtung (60) ausgeführt ist.
